# EUROPEAN PATENT SPECIFICATION

(11) **EP 2 176 145 B1**
(45) Date of publication and mention of the grant of the patent: **27.03.2013**
(21) Application number: 08788879.8
(22) Date of filing: 10.07.2008
(51) Int. Cl.: B65G 21/20, B65G 51/03

(54) **MOVING DEVICE**
BEWEGLICHE VORRICHTUNG
DISPOSITIF DE DÉPLACEMENT

(30) Priority: 10.07.2007 IT MO20070230
(43) Date of publication of application: 21.04.2010
(73) Proprietor: Vetromeccanica S.r.l.-societa' Unipersonale, 43024 Neviano degli Arduini (IT)
(72) Inventor: FRIGGERI, Giovanni, I-43022 Basilicagoiano (IT)
(74) Representative: Cicconetti, Andrea
(86) International application number: PCT/IB2008/001811
(87) International publication number: WO 2009/007836

(56) References cited:
- US-A- 4 768 257
- US-A1- 2006 093 443
- US-A1- 2007 114 112

## Description

The invention relates to a device for lineary moving an object, in particular a moving device associable with an air-conveying apparatus for conveying empty plastic containers and arranged for moving and adjusting the position of guides that act as an abutment along a movement path of said containers.

Such a device is described by the preamble of claim 1 as disclosed in US-A- 4 768 257. The invention also relates to an air-conveying apparatus for conveying containers according to the preamble of claim 14 as disclosed in US-A-2006 093443.

An empty container made of plastics, typically a bottle, can be moved along a movement path owing to an air-conveying apparatus. The bottle has an elongated body of tubular shape, of any section, for example circular, oval, square, etc, and an end portion with a decreasing section, called the neck, provided with an annular ridge.

The conveying apparatus comprises a pair of supporting guides arranged along the entire movement path to engage with the annular ridge of the bottle, which is thus hanged and supported by said supporting guides and can slide longitudinally along the supporting guides.

The air-conveying apparatus further comprises air conveyors that emit jets of pressurised air so as advance the bottle along the movement path. The air-conveying apparatus includes a pair of abutting guides that are parallel to the supporting guides and arranged at a lower vertical height to ensure correct positioning and transverse alignment of the bottle during advancing. Such guides are at a distance from one another that is little greater than a transverse dimension of the body of the bottle, so that the bottle, inserted between the two guides, is prevented from oscillating transversely during advancing.

If it is necessary to move a bottle having a different size, it is necessary to be able to modify the distance between the two guides so as maintain the distance between the two guides a little greater than a transverse dimension of the body of said bottle.

A device is known for moving an abutting guide comprising a pneumatic actuator arranged transversely to the guide and provided with a piston provided with a stem the free end of which is fixed to the guide. A further moving device, structurally and functionally shaped like the preceding one, is fixed to a further guide so that the pair of moving devices, which are opposite and aligned on one another, is able to vary the distance between the two guides.

A drawback of these devices is that they enable the guide to be positioned exclusively in two positions, corresponding substantially to the configuration of the beginning and the end of stroke of the piston. In this manner, the guides can be arranged at a distance that can assumes only two values and consequently such guides are able to receive only bottles having two prefixed sizes.

A further moving device is known comprising two pneumatic actuators arranged in succession transversely to the abutting guide. The first pneumatic actuator has a piston that is movable in a chamber, from which piston a stem protrudes a free end of which is fixed to the guide. The second pneumatic actuator can be arranged in an end-stroke configuration in which the stem thereof is inserted into the chamber of the first pneumatic actuator so as to act as an abutment for the piston of the first pneumatic actuator. The moving device is thus able to ensure positioning of the guide in three distinct positions.

A drawback of this device is that it is relatively complex and therefore has rather high purchase, assembly and maintenance costs.

A further drawback of this device is that the number of positions that the guide can assume thus remains limited. Moreover, such positions are extremely stiff and are not susceptible to any adjustment.

A further moving device is known comprising a linear electric actuator fixed to a guide and arranged for moving the guide.

A drawback of this device lies in the high cost of the linear electric actuator. In addition to that, in the case of guides having a great length for which a plurality of moving devices are necessary, each electric actuator needs an electronic control system and this technical solution is thus very costly.

Moreover, for reasons of safety, the use of electric devices is inadvisable in certain applications, for example in the food industry.

Further prior art is disclosed in US4768257A, US2006/093443A1 and US2007/114112A1.

US4768257A discloses a vehicle windshield wiper, whereby a blade is supported on a lever member hinged to a fixed support and designed to swing about a pin by virtue of a linear actuator, an output member of which consists at least partially of a screw connected to an electric motor having a hollow shaft, by means of a circirculating-ball screw-nut screw coupling, and extending through the motor itself. US2006/093443A1 refers to the field of air transport systems for plastic vessels equipped with a projecting collar, and in particular refers to a device equipped with guides and for the vessel body that provide for adjusting means of the vertical guide position with respect to a sliding lane of the bottle collar and adjusting means of the horizontal guide position with respect to the vertical vessel axis. The adjusting means can be simultaneously driven through a processor in which characteristic dimensional data of various vessels are entered.

US2007/114112A1 describes a conveyor line for products such as bottles, cans or similar containers with at least one guide railing that is adjustable across the direction of conveyance and is operable by at least one actuator drive, whereby stops which can optionally be moved into several preset positions in the adjustment path of the guide railing or the at least one actuator drive which define various railing positions and thereby delineate the adjustment path.

An object of the invention is to improve moving devices, in particular the moving devices associable with air-conveying apparatuses for conveying containers and arranged for moving an abutting guide of said containers.

A further object of the invention is to obtain a moving device that enables an object, for example an abutting guide, to be moved linearly, and enables said object to take up a high number of different positions.

Another object is to make a moving device that is simple and cheap to make and which has precise and reliable operation.

In a first aspect of the invention there is provided a device for linearly moving an object as defined in claim 1.

The nut screw means is provided externally with fin means shaped so as to be pushed by the linear actuator means and enable the nut screw means to rotate by constant angular leads. Alternatively, the device may comprise toothed wheel means, mounted on the nut screw means by interposing a freewheel means and which is rotatable by the linear actuator means so as to rotate the nut screw means by constant angular leads.

Owing to this aspect of the invention it is possible to make a moving device provided with a movement element that is movable in a great number of positions, at an end of said element there being associable an object to be moved, in particular an abutting guide of an air-conveying apparatus for conveying containers.

The movement element is in fact movable along a movement direction by consecutive steps having a prefixed value, driven by the linear actuator means, comprising for example pneumatic cylinders, having a constant and defined stroke. In the first aspect of the invention the reciprocating movement of the linear actuator means is in fact transformed by the fin means, or by the toothed wheel means, into a rotation by constant and consecutive steps of the nut screw means.

In a second aspect of the invention there is provided an air-conveying apparatus for conveying containers as defined in claim 14.

Owing to this aspect of the invention it is possible to obtain an air-conveying apparatus for conveying containers provided with abutting guides that are movable in a great number of positions. To the end of a movement element of the moving device there can be connected in fact a guide so that the guide is movable together with the movement element along a movement direction that is substantially transverse to an advance direction of the containers along the air-conveying apparatus. The guide is moved along the movement direction according to consecutive steps having a prefixed value. In this manner, by using in the device linear actuator means having a constant and defined stroke, it is possible to position the guide in a great number of different positions so as to enable a pair of guides, each guide being fixed to a respective moving device, to be able to interact with a great number of sizes of containers.

The invention can be better understood and implemented with reference to the attached drawings, which illustrate an embodiment thereof by way of non-limiting example in which;
Figure 1 is a schematic and partially sectioned side view of the moving device of the invention;
Figure 2 is a schematic and partially sectioned front view of the device in Figure 1;
Figure 3 is a schematic front view of an air-conveying apparatus for conveying containers comprising a pair of moving devices supporting respective abutting guides;
Figure 4 is a detail of Figure 3 that shows the pair of moving devices in an operating configuration;
Figure 5 is a detail of Figure 3 that shows the pair of moving devices in a further operating configuration;
Figure 6 is a side view of another embodiment of the moving device in Figure 1;
Figure 7 is a front view of the device in Figure 6;
Figure 8 is a perspective view of the device in Figure 6;
Figure 9 is a plan view of the device in Figure 1:
Figure 10 is a section along the line X-X in Figure 9;
Figure 11 is a section along the line XI-XI in Figure 9;
Figure 12 is a section along the line XII-XII in Figure 9;
Figure 13 is an enlarged detail in Figure 12;
Figure 14 is a front view of a further embodiment of the moving device in Figure 1;
Figure 15 is a perspective view of the device in Figure 14;
Figure 16 is a plan view of the device in Figure 14;
Figure 17 is a section along the line XVII-XVII in Figure 14;
Figure 18 is a section along the line XVIII-XVIII in Figure 16;
Figure 19 is an enlarged detail in Figure 17;
Figure 20 is a section along the line XX in Figure 16.

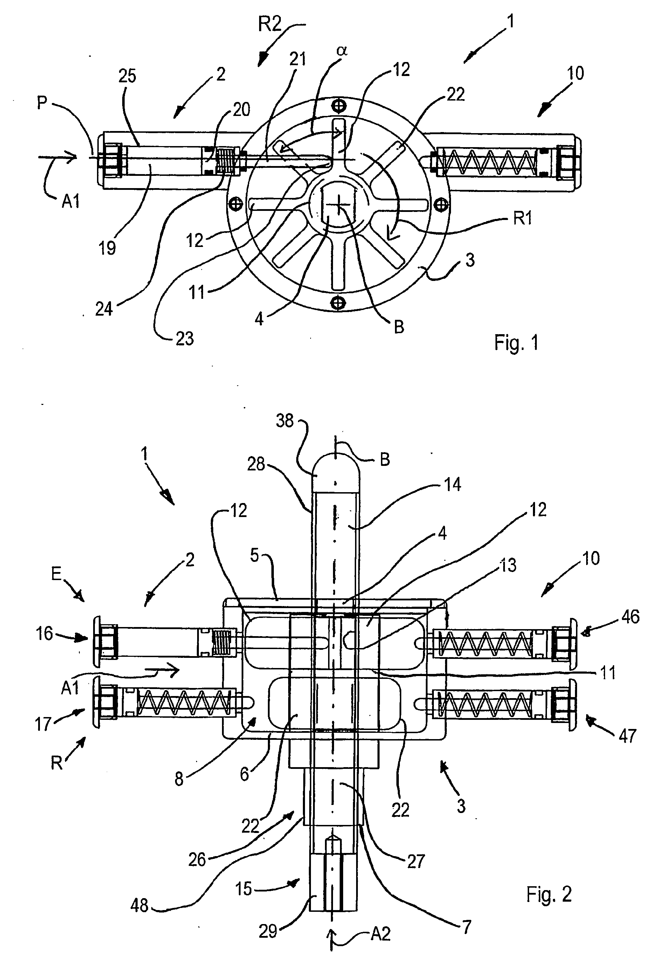

With reference to Figures 1 and 2, there is illustrated a moving device 1 comprising a casing 3, for example cylindrical, having a longitudinal axis B. The casing 3 has a first hole 4 arranged in a central position on a face 5. The moving device 1 comprises nut screw means 8, for example a lead nut screw, arranged inside the casing 3. The nut screw means 8 includes a cylindrical element 11, having an axis coinciding with the axis B. The cylindrical element 11 has a respective circular hole 13 that is arranged along the axis B and is internally threaded. The nut screw means 8 is provided with a plurality of fins 12, that protrude radially from the cylindrical element 11 at constant angular distances. The fins 12 are arranged on the cylindrical element 11 at the face 5 and extend along the axis B.

The nut screw means 8 further comprises a plurality of further fins 22 that protrude radially from the cylindrical element 11 at constant angular distances. The further fins 22 are arranged in succession to the fins 12 according to the axis B and extend along the axis B. In particular, the further fins 22 are arranged on the cylindrical element 11 in angular positions that are staggered in relation to the fins 12. In this manner each further fin 22 is subsequent to the fins 12 according to the axis B and is interposed between two successive fins 12 at the same angular distance α from each of them.

The moving device 1 comprises hub means 26 fixed to a further face 6, opposite the face 5, of the casing 3 and provided with a protruding element 7 that protrudes along the axis B. The protruding element 7 comprises a side surface 48 intended for engaging in a cavity 49 of a frame 40 of an air-conveying apparatus 43, with which said moving device 1 can be associated, so that said device 1 is fixed to the frame 40.

The moving device 1 comprises screw means 15 comprising a movement element 28 that extends along the axis B. The movement element 28 is inserted into the casing 3 and into the nut screw means 8; in particular it is inserted inside the hole 13 of the cylindrical element 11 and exits the casing 3 through the first hole 4. Said first hole 4 has a shaped section, having a first circular portion opposite a second circular portion. The section further comprises a first linear portion opposite a second linear portion, so that the linear and circular portions are alternate. The movement element 28 is mounted on the hub means 26, in particular it is inserted into a second hole 27 of the hub means 26.

The movement element 28 comprises a threaded portion 14 that has a respective section that is transverse to the axis B substantially coinciding with the shaped section of the first hole 4. The section of the threaded portion 14 of the movement element 28 differs from the section of the first hole 4 by the fact that the circular portions are threaded so that the movement element 28 can engage the nut screw means 8. The linear portions of the further section of the threaded portion 14 are arranged for interacting in a shapingly coupled manner with the respective linear portions of the section of the first hole 4, so as to prevent the movement element 28 from rotating.

In a version of the moving device that is not illustrated in the figures, the movement element 28 is rotated by means that has a substantially similar shape and comprising, for example, a tooth of the casing 3 that engages a longitudinal linear groove in said movement element 28.

The movement element 28 further comprises a terminal portion or end 29, arranged at the hub means 26, that can be fixed to an object so as to move this object along the axis B.

The moving device 1 comprises actuator means 2, in particular linear actuator means, which is arranged in a decentralised position with respect to the casing 3. The actuator means 2 is arranged according to a driving direction A1 and defines a plane P that is substantially parallel to the axis B and does not contain the axis B.

The actuator means 2 comprises a first actuator 16, for example a single-acting pneumatic cylinder, arranged for interacting with the fins 12. The actuator means 2 comprising also a second actuator 17, for example a further single-acting pneumatic cylinder, which is arranged alongside the first actuator 16 along the axis B for interacting with the further fins 22.

The first actuator 16 and the second actuator 17 comprise a respective cylinder 25 inside which, along the driving direction A1, a respective piston 20 slides that defines, together with the cylinder 25, a respective chamber 19. From the piston 20 there extends along the driving direction A1 a stem 21 having an end 23 intended for interacting with the fins 12 or the further fins 22. When a pressurised fluid, for example compressed air, is delivered into the chamber 19, the piston 20 slides along the driving direction A1, thus approaching the casing 3. In this case the stem 21 is projected almost completely outside the cylinder 25 and an actuator of the actuator means 2 is thus arranged in the extended configuration E, assumed, for example, by the first actuator 16 in Figure 2.

The first single-acting actuator 16 and the second single-acting actuator 17, comprise elastic means 24 arranged for interacting on a side of the piston 20 opposite that of the chamber 19. When the fluid is made to exit the chamber 19, owing to the elastic means 24 the piston 20 slides in an opposite direction to the driving direction A1, moving away from the casing 3. In this case the stem 21 is received almost totally inside the cylinder 25 and an actuator of the actuator means 2 is thus arranged in the retracted configuration R, assumed for example by the second actuator 17 in Figure 2.

During operation, the first actuator 16 and the second actuator 17 are driven alternately. In particular, when the first actuator 16 moves from the retracted configuration R to the extended configuration E, the end 23 of the first actuator 16 comes into contact with the fin 12, causing the rotation of the fin 12, and consequently of the nut screw means 8, around the axis B. In particular, the nut screw means 8 rotates by the angular distance or angular lead α according to the rotation direction R1, for example clockwise. In this manner, the movement element 28 that engages the first shaped hole 4, not being able to rotate, is moved linearly along the axis B according to an advance direction A2 by a prefixed movement that depends on the pitch of the thread on the movement element 28 and on the angular distance α.

Subsequently, the first actuator 16 is returned to the retracted configuration R and the second actuator 17 can then be driven, which moves from the retracted configuration R to the extended configuration E. The end 23 of the second actuator 17 then comes into contact with the further fin 22, causing the further fin 22 to rotate and consequently causing the nut screw means 8 to rotate around the axis B. In particular, the nut screw means 8 still rotates by the angular distance α according to the rotation direction R1 and the movement element 28 is thus still linearly moved by the prefixed movement according to the advance direction A2. The moving device 1 comprises further actuator means 10, in particular further linear actuator means, arranged in a decentralized position compared with the casing 3 according to the driving direction A1. In particular, the further actuator means 10 is arranged on the plane P on the opposite side of the actuator means 2 with respect to the casing 3. The further actuator means 10 can also be arranged in different positions provided that the further actuator means 10 is arranged so as to act on a side of the fins 12 and of the further fins 22 opposite the side on which the actuator means 2 acts. For example, the further actuator means 10 can be arranged so as to define a further plane, which is parallel to the plane P but distinct therefrom or orthogonal thereto.

The further actuator means 10 is structurally and functionally configured like the actuator means 2. The further actuator means 10 thus comprises a further first actuator 46, arranged for interacting with the fins 12, and a further second actuator 47, which is arranged adjacent to the further first actuator 46 along the axis B for interacting with the further fins 22.

In a similar manner to the actuator means 2, the further actuator means 10 enables the nut screw means 8 to rotate by the annular distance α according to a rotation direction R2 opposite the rotation direction R1, for example in an anticlockwise direction. In this manner, it is possible to move linearly the movement element 28 along the axis B by a quantity corresponding to the prefixed movement according to a direction opposite the advance direction A2.

The actuator means 2 and the further actuator means 10 thus enable the position of the movement element 28 to be adjusted along the axis B. In particular, the actuator means 2 and the further actuator means 10 can arrange the movement element 28 and thus the object connected to the movement element 28 in a great number of positions along the axis B. The moving device 1 can be used in various applications, in particular it can be used to move guides that act as an abutment in an air-conveying apparatus for conveying empty containers made of plastics, for example bottles.

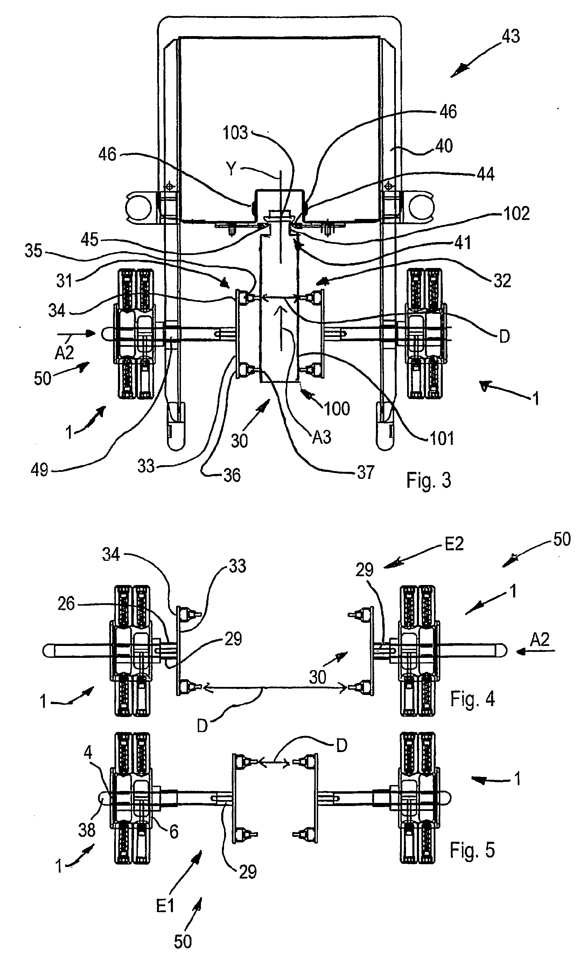

With reference to Figure 3, there is illustrated an air-conveying apparatus 43 arranged for moving empty plastic containers 100 for containing liquids, for example containers such as bottles, along a movement path.

Each container 100 has a body 101 and an end portion with a decreasing section, called a neck 102, provided with an annular ridge 103.

The conveying apparatus 43 comprises a frame 40 that supports supporting guide means 41. The supporting guide means 41 comprises a first supporting guide 44 and a second supporting guide 45 that are arranged along the entire movement path to engage with the annular ridge 103. In this manner the container 100 is appended to and supported by the supporting guide means 41 and can slide longitudinally along the supporting guide means 41.

The conveying apparatus 43 further comprises air conveyors 46 that emit jets of pressurised air so as to advance the containers 100 along the movement path.

The conveying apparatus 43 comprises guide means 30 that is arranged along the movement path parallely to the supporting guide means 41 at a lower vertical height. The guide means 30 is arranged for ensuring a correct positioning and transverse alignment of the containers 100 during advancing. In particular, the guide means 30 comprises first guide means 31 arranged on a side of the frame 40 and second guide means 32 that is arranged on an opposite side of the frame 40 with respect to the first guide means 31, so as to face the first guide means 31.

The first guide means 31 has to be positioned at a distance D from the second guide means 32 that is little greater than a transverse dimension of the body 101 of the container, so that said body 101 can be inserted between the first guide means 31 and the second guide means 32. In this manner, during advancing of the container 100 along the movement path, the guide means 30 prevents said container 100 from oscillating on a plane that is transverse to the movement path.

The first guide means 31 and the second guide means 32 comprise a crosspiece 33, arranged according to a direction A3 defined by a longitudinal axis Y of the container 100. The crosspiece 33 comprises a first end 34 that supports a first guide 35, arranged for interacting with a portion of the external surface of the body 101, and a second end 36 that supports a second guide 37, arranged for interacting with a further portion of the external surface of the body 101.

The configuration of the guide means 30 is adjusted by a pair 50 of moving devices 1, which is thus able to vary the distance D.

The first guide means 31 is fixed to a device of the pair 50 and the second guide means 32 is fixed to a further device of the pair 50. In particular, each crosspiece 33 is fixed to the terminal portion 29 of the movement element 28 of each moving device 1 by fixing means that is not shown.

The conveying apparatus 43 further comprises a supplying device, which is not shown, arranged for supplying the actuator means 2 and the further actuator means 10 of each moving device 1.

The conveying apparatus 43 comprises a control device, which is not shown, arranged for driving the actuator means 2 and the further actuator means 10 of each moving device 1.

Figures 4 and 5 show the pair 50 of moving devices 1, facing one another, in two different operating configurations.

Figure 5 shows the pair of moving devices 50 in a first operating configuration E1 in which, in each moving device 1, a further terminal portion 38, opposite the terminal portion 29, is arranged at the first hole 4, so that the main part of the movement element 28 protrudes from the further face 6. In the first operating configuration E1 the guide means 30 is arranged so that the distance D is minimal.

Figure 4 shows the pair 50 in a second operating configuration E2 in which, in each moving device 1, the terminal portion 29 is inserted inside the hub means 26, so that the main part of the movement element 28 protrudes from the face 5. In the second operating configuration E2 the guide means 30 is arranged so that the distance D is maximum.

Owing to the actuator means 2 and to the further actuator means 10, the pair 50 can be arranged in a great number of intermediate configurations in which the distance D assumes a value that is comprised between the minimum value thereof, assumed in the first operating configuration E1, and the maximum value thereof, assumed in the second operating configuration E2.

By driving alternately the actuators of the actuator means 2 and of the further actuator means 10 of each moving device 1, it is in fact possible to move linearly the movement element 28 along the longitudinal axis B in a great number of positions, that are spaced from one another by the prefixed movement.

In this manner, the guide means 30 is able to receive containers 100 having a plurality of sizes, inasmuch as the pair 50 is able to adjust the distance D of the guide means 30 so that it is little greater than a transverse dimension of the body 101 of the container 100.

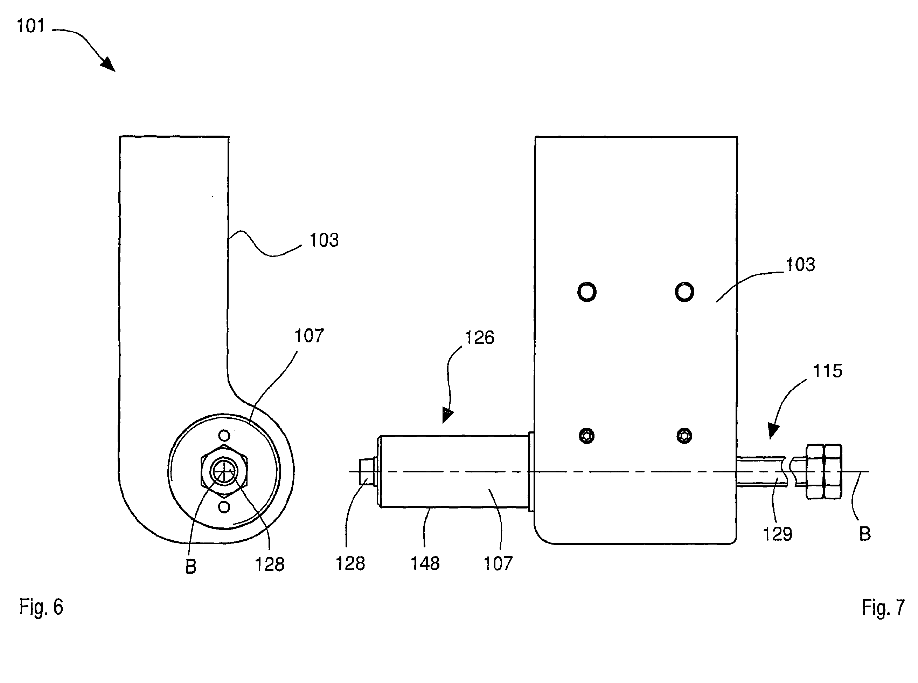

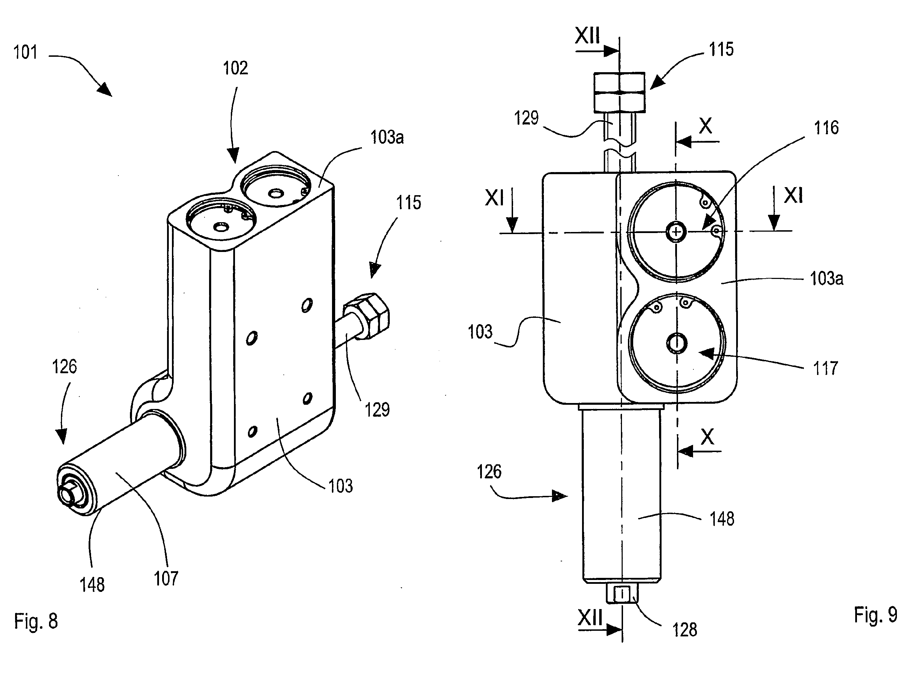

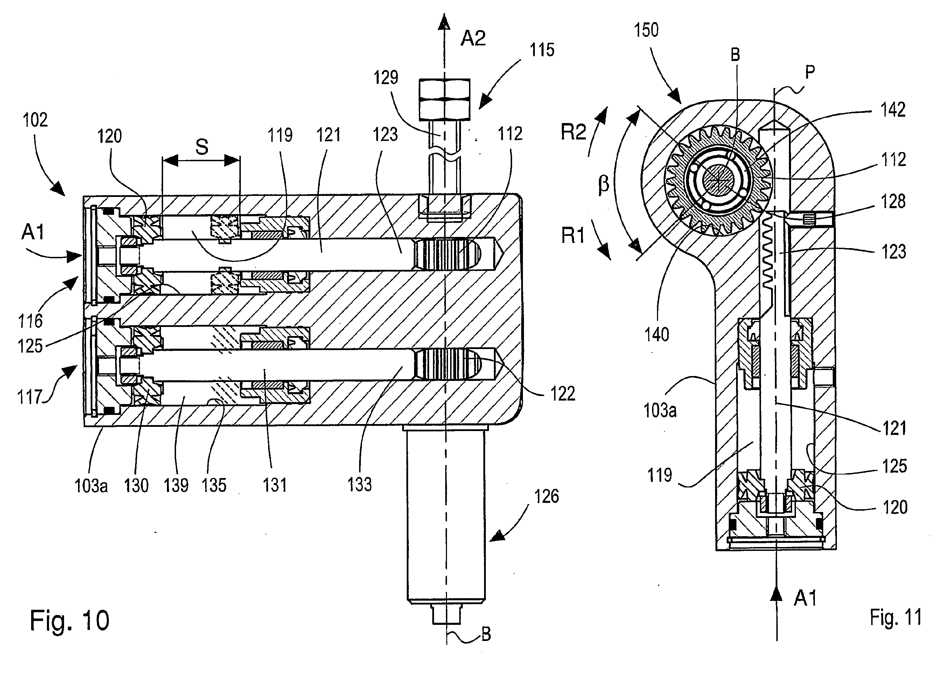

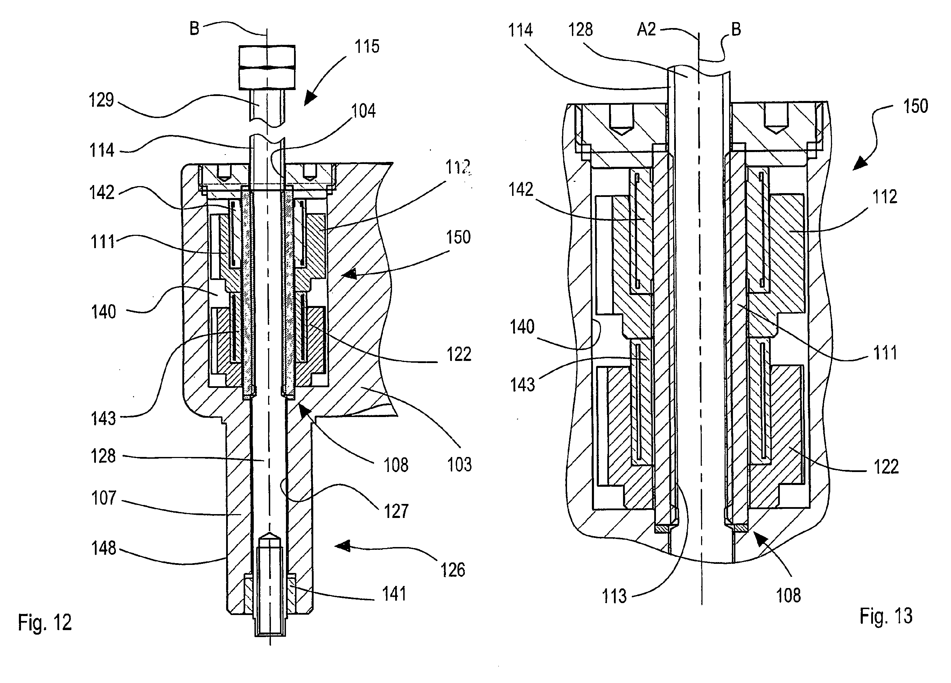

With reference to Figures 6 to 13, there is illustrated another embodiment of the moving device 101 of the invention comprising a casing 103 provided with a cavity 140 suitable for receiving nut screw means 108 arranged for engaging with screw means 115 comprising a movement element 128 that extends along a longitudinal axis B.

The nut screw means 108 includes a cylindrical element 111, the so-called lead nut screw, having an axis coinciding with the longitudinal axis B. The cylindrical element 111 has a respective hole 113, that is arranged along the axis B and is internally threaded so as to couple with a threaded portion 114 of said movement element 128. The movement element 128 is thus inserted into the casing 103 and into the nut screw means 108 and exits from the casing 103 through a first hole 104 with an end 129 thereof that can be fixed to an object so as to move the object along the axis B.

The moving device 1 comprises hub means 126 fixed to the casing 103 and provided with a protruding element 107 that protrudes along the axis B. The hub means 126 is made, for example, as a single body with the casing 103.

The protruding element 107 comprises a side surface 148 intended for engaging in a cavity 49 of a frame 40 of an air-conveying apparatus 43, with which said moving device 101 can be associated, so that said device 101 is fixed to the frame 40.

The hub means 126 comprises a second hole 127 inside which the movement element 128 slides. A bush 141 is mounted inside the second hole 127 at an end of the protruding element 107 to support the movement element 128 in sliding. The moving device 101 comprises driving means 150 by which linear actuator means 102 is able to rotate the nut screw means 108 by consecutive angular leads so as to move the movement element 128 along the longitudinal axis B.

The driving means 150 comprises toothed wheel means 112, 122 mounted on said cylindrical element 111, by interposing freewheel means 142, 143, and is rotated by the linear actuator means 102.

The linear actuator means 102 is housed in a transverse portion 103a of the casing 103 and is arranged for acting according to a driving direction A1 that is transverse and in particular orthogonal to the longitudinal axis B. Moreover, the linear actuator means 102 lies on a plane P that is substantially parallel to the axis B and does not contain the axis B.

The actuator means 102 comprises a first actuator 116, for example a double-acting pneumatic cylinder, arranged for interacting with a first toothed wheel 112 mounted on the cylindrical element 111 by a first freewheel 142.

The first actuator 116 comprises a first cylinder 125, obtained in the transverse portion 103a of the casing 103, inside which there slides, along the driving direction A1, a first piston 120, that defines, together with the first cylinder 125, a first chamber 119. From the first piston 120 there extends along the driving direction A1 a first stem 121 having a first toothed end 123 intended for engaging the first toothed wheel 112. In particular, the first toothed end 123 comprises a portion of rack that is suitable for engaging with the toothing of the first toothed wheel 112. The first freewheel 142, of known type, is such as to enable the cylindrical element 111 to rotate only when the first freewheel 142 is driven by the first toothed wheel 112 according to a rotation direction R1.

When a pressurised fluid, typically compressed air, is delivered to the chamber 119 so that the piston 120 slides along the driving direction A1, the toothed end 123 progressively engages the first toothed wheel 112 that drives the first freewheel 142. The first freewheel 142 is rotated in the rotation direction R1 and transmits the rotation torque to the cylindrical element 111, that by rotating linearly moves the movement element 128 along the longitudinal axis B, for example, in the advance direction A2, by a prefixed movement. This prefixed movement depends on the pitch of the thread on the movement element 128 and on the cylindrical element 111 and on an angle or angular lead β by which the first toothed wheel 112 rotates. The rotation angle β is a function of a stroke S of the piston 120 in the cylinder 125 and of an transmission ratio between the toothed portion 123 of the stem 121 and the toothing of the first toothed wheel 112.

When a pressurised fluid is delivered into the chamber 119 so that the piston 120 slides along a direction opposite the driving direction A1, the toothed end 123 progressively disengages from the first toothed wheel 112 that drives the first freewheel 142. The first freewheel 142 is rotated in a further rotation direction R2, opposite the rotation direction R1, idles and does not rotate the cylindrical element 111, which thus remains stationary like the movement element 128.

By successively and repeatedly driving the first actuator 116 it is thus possible to move in the advance direction A2 the movement element 128 by a set and precise amount that is proportional to the number of strokes made by the first actuator 116.

The linear actuator means 102 further comprises a second actuator 117, for example a double-acting pneumatic cylinder, arranged for interacting with a second toothed wheel 122 mounted on the cylindrical element 111 by a second freewheel 142.

The second actuator 117 is substantially identical to the first actuator 116, and comprises a further cylinder 135, obtained in the transverse portion 103a of the casing 103, inside which there slides, along the driving direction A1, a further piston 130, that defines, together with the cylinder 135, a further chamber 139. From the further piston. 130 there extends along the driving direction A1 a further stem 131 having a toothed end 133 intended for interacting with the second toothed wheel 122. The second freewheel 143, unlike the first freewheel 142, is such as to enable the cylindrical element 111 to rotate only when the second freewheel 143 is driven according to a further rotation direction R2 opposite the first rotation direction R1. In this manner, the second actuator 117, when driven in the direction opposite the driving direction A1, rotates the cylindrical element 111, which linearly moves the movement element 128 by a prefixed movement, according to a direction opposite the advance direction A2. Also in this case, the prefixed movement depends on the pitch of the thread on the movement element 128 and on a respective rotation angle of the second toothed wheel 122. This rotation angle is a function of a respective stroke of the second piston 130 in the second cylinder 135 and of an transmission ratio between the respective toothed portion 133 of the second stem 131 and the toothing of the second toothed wheel 122. The stroke of the second piston 130 and the transmission ratio of the second actuator 117 are, for example, substantially the same respectively as the stroke of the first piston 120 and the transmission ratio of the first actuator 116. Consequently, by successively and repeatedly driving the second actuator 117 it is possible to move the movement element 128 in the opposite direction to the advance direction A2, the movement element 128 can then be returned to an initial position.

The actuator means 102 thus enables the position of the movement element 28 along the longitudinal axis B to be adjusted. In particular, the first actuator 116 and the second actuator 117 can arrange the movement element 28, and thus the object connected to the movement element 28, in a great number of positions along the axis B.

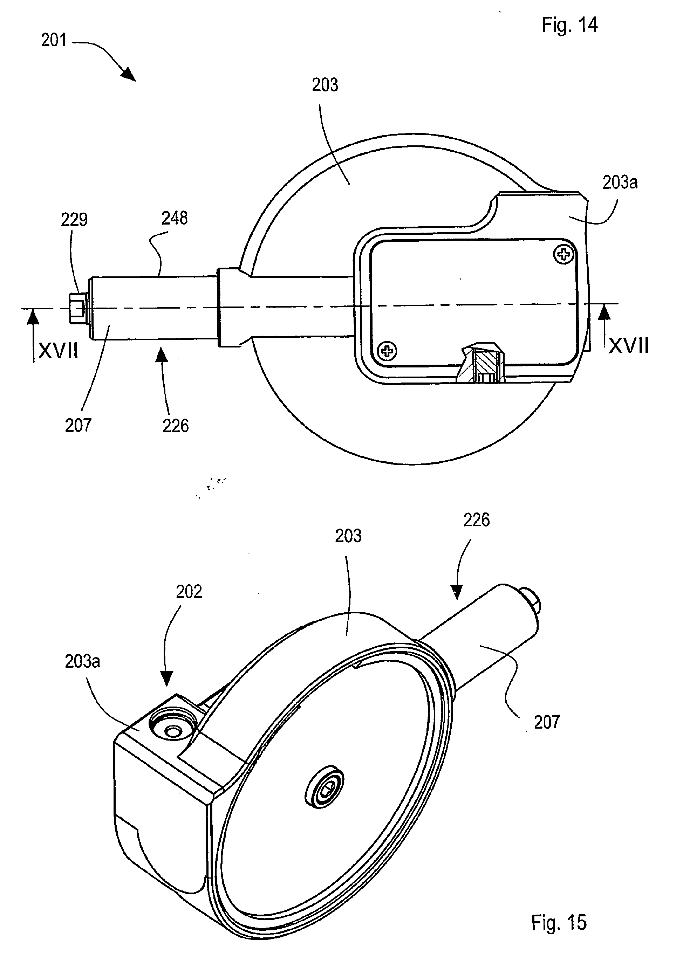

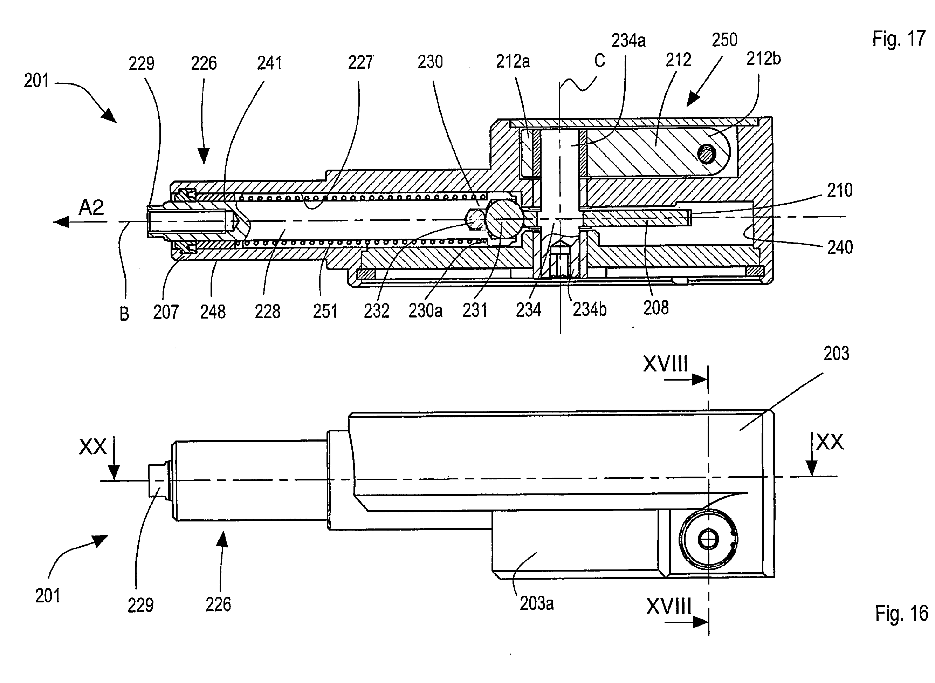

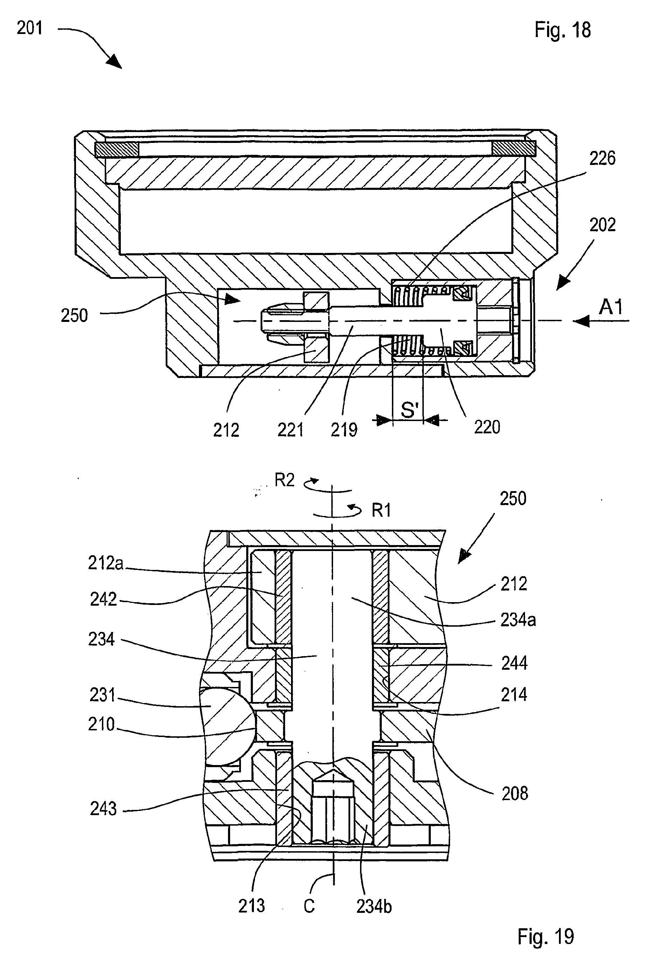

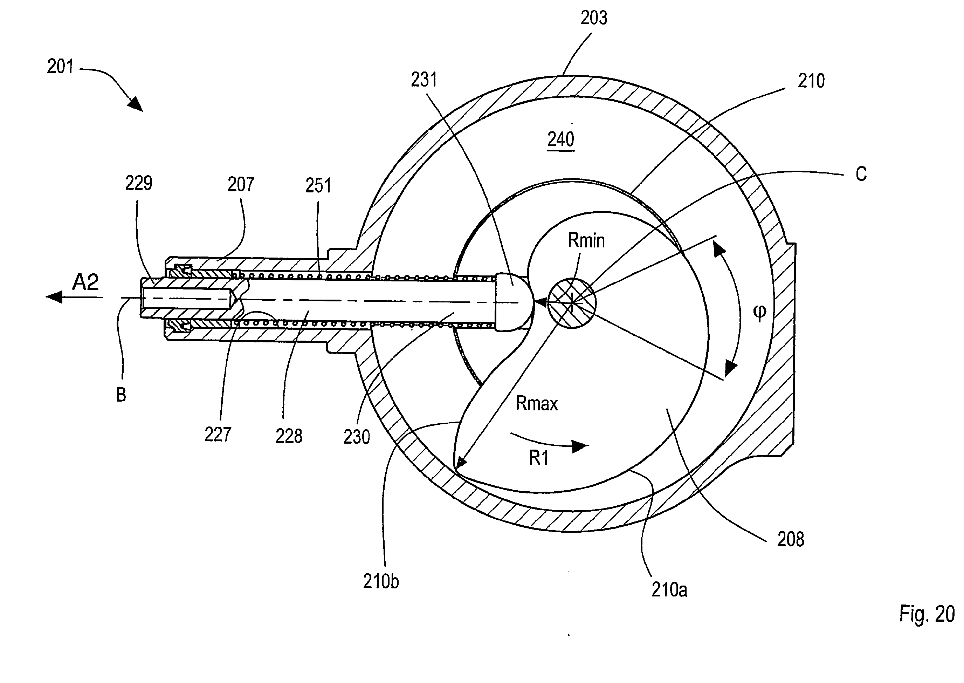

With reference to Figures 14 to 20, there is illustrated a further embodiment of the moving device 201 of the invention comprising a casing 203 provided with a cavity 240, of a substantially cylindrical shape, that is suitable for receiving cam means 208 arranged for engaging a movement element 228 that extends along a longitudinal axis B and is provided with a first end 229 that can be fixed to an object to be moved.

The cam means 108 includes a flat or disc-shaped cam that is rotatable around a respective rotation axis C and acts on a second end 230 of the movement element 228. Ball means 231, 232 is rotatably housed in a seat 233 made in said further terminal portion 230 to abut on an outer profile or contact wall 210 of the flat cam 208. As explained in greater detail further on in the description, the outer profile 210 comprises a first contact portion 210a, for moving the movement element 228 along a forward stroke, and a second contact portion 210b, to move the movement element 228 along a backward stroke.

The device comprises elastic means 251 acting on the movement element 228 so as to maintain the further terminal portion 230 abutting on the outer profile 210.

The rotation axis C of cam means 208 is substantially orthogonal to the longitudinal axis B.

The moving device 201 comprises hub means 226 fixed to the casing 203 and provided with a protruding element 207 that protrudes along the axis B. The hub means 226 is made, for example, as a single body with the casing 103.

The protruding element 207 comprises a side surface 248 intended for engaging a respective cavity 49 of a frame 40 of an air-conveying apparatus 43, with which said moving device 201 can be associated, so that said device 201 is fixed to the frame 40.

The hub means 226 and the casing 203 comprise a gap 227 inside which the movement element 28 is slidably mounted. A bush 241 is fixed to the inside of the gap 227 at an end of the protruding element 207 to support the sliding of the movement element 228.

The cam means 208 is fixed to and supported by a supporting pin 234 that is rotatably mounted inside the casing 203, on opposite walls of the casing 203 defining the cavity 240. The moving device 201 comprises driving means 250 by which linear actuator means 202 is able to rotate the cam means 208 by consecutive angular leads so that the cam means 208 linearly moves the movement element 228 along the longitudinal axis B.

The driving means 150 comprises a crank 212 provided with a first end 212a fixed to the supporting pin 234 and a second end 212b connected to the linear actuator means 202.

In particular, the first end 212a of the crank 212 is mounted on a first terminal portion 234a of the supporting pin 234 by interposing a freewheel 242.

The linear actuator means 202 is housed in a transverse portion 203a of the casing 203 and is arranged for acting according to a driving direction A1 that is transverse and in particular orthogonal to the longitudinal axis B.

The actuator means 202 comprises an actuator, for example a single-acting pneumatic cylinder, that includes a cylinder 225, obtained in the transverse portion 203a of the casing 203, inside which there slides, along the driving direction A1, a piston 220, that defines, together with the cylinder 225, a first chamber 219. From the piston 220 there extends along the driving direction A1 a stem 221 connected to the second end 212b of the crank 212.

A further freewheel 243 is interposed between a second terminal portion 234b of the supporting pin 234 and a seat 213 made in the casing 203.

A further seat 214 of the casing 203 receives bearing means 244, for example a sliding bush, intended for rotatably supporting the supporting pin 234.

The freewheel 242 and the further freewheel 243, of known type and comprising for example respective one-way rolling bearings, are such as to enable the supporting pin 234 to rotate, and thus the flat cam 208 to rotate, only when said pin is rotated by the crank 212 in a rotation direction R1. On the other hand, the freewheels 242, 243 idle, without transmitting rotation torque to the supporting pin 234, when rotated by the crank 212 in a further rotation direction R2 opposite the rotation direction R1.

The supporting pin 234 rotates the flat cam 208 that in turn linearly moves the movement element 228 along the longitudinal axis B in the advance direction A2 by a prefixed movement. This prefixed movement depends on the form of the first contact portion 210a of the cam 208 and on an angle or angular rotation lead ϕ of the cam 208. This angular lead ϕ is equal to a width of the rotation performed by the crank 212 driven by the actuator 202. The angular lead ϕ is thus a function of a length of the said crank 212 and of a stroke S' of the piston 220 in the cylinder 225.

When a pressurised fluid, typically compressed air, is delivered into the chamber 219, so that the piston 220 slides along the driving direction A1, the stem 221 drives the crank 212, which rotates, in the rotation direction R1, by means of the freewheel 142, the supporting pin 234 and thus the flat cam 208.

When the chamber 219 is discharged, further elastic means 226 provided in the cylinder 225 acts on the piston 220 so as to push the piston 220 in a direction opposite the driving direction A1. This causes the crank 212 to rotate in the opposite further rotation direction R2. Nevertheless, the freewheels 242, 243 driven in the opposite further rotation direction R2 idle and do not rotate the supporting pin 234 and the flat cam 208, which thus remain stationary, the same as the movement element 228.

By successively and repeatedly driving the actuator 202 it is thus possible to move in the advance direction A2 the movement element 228 by a set and precise amount that is proportional to the number of strokes performed by said actuator 116.

The first contact portion 210a is in fact shaped so as to make for each angular lead ϕ the same linear advancing step of the movement element 228.

The first contact portion 210a has an increasing radius starting from a minimum radius Rmin, at which the movement element 228 is in an internal minimum extent position, which movement element 228 is substantially completely contained inside the casing 203, up to a maximum radius Rmax, at which the movement element 228 is in an external maximum extent position outside the casing 203.

The second contact portion 210b of the cam 208 has on the other hand a decreasing radius starting from the maximum radius Rmax up to the minimum radius Rmin. The second contact portion 210b enables the movement element 228 to be moved in the direction opposite the movement direction A2 from the maximum extent position to the minimum extent position.

The elastic means 251, arranged inside the cavity 227, acts on the movement element 228 so as to push the movement element 228 towards the cam means 208. The elastic means 251 comprises, for example, a coil spring mounted coaxial to the movement element 228 and interposed between the bush 241 and a collar 230a made on the further terminal portion 230.

The actuator means 102 thus enables the position of the movement element 28 along the longitudinal axis B to be adjusted. In particular, the actuator 202 can arrange the movement element 228 and thus the object connected to the movement element 228 in a great number of positions along the longitudinal axis B.

## Claims

1. Device for linearly moving an object (31, 32), in particular an abutting guide for containers (100) in an air-conveying apparatus (43), comprising a movement element (28; 128), associable at an end (29; 129) thereof with said object (31, 32) and provided with a threaded portion (14; 114) suitable for engaging with nut screw means (8; 108), and linear actuator means (2, 10; 102) arranged for rotating said nut screw means (8; 108) by consecutive angular leads so as to move said movement element (28; 128) along a respective longitudinal axis (B), **characterised in that** said linear actuator means (2, 10) comprises actuator means (2) for rotating said nut screw means (8) according to a rotation direction (R1) and further actuator means (10) for rotating said nut screw means (8) according to a further rotation direction opposite said rotation direction (R1).

2. Device according to claim 1, wherein said angular leads have a defined size (α, β).

3. Device according to claim 1 or 2, wherein said linear actuator means (2, 10; 102) acts along a direction (A1) that is transverse to said longitudinal axis (B).

4. Device according to any preceding claim, wherein from an outer wall of said nut screw means (8) there projects fin means (12, 22) shaped so as to be pushed by said linear actuator means (2, 10).

5. Device according to claim 4, wherein said fin means (12, 22) projects radially with respect to said longitudinal axis (B).

6. Device according to claim 4, or 5, wherein said fin means (12, 22) comprises a first plurality of fins (12) and a second plurality of fins (22), said second plurality of fins (22) being arranged alongside said first plurality of fins (12) along said longitudinal axis (B).

7. Device according to claim 6, wherein said second plurality of fins (22) is angularly staggered with said first plurality of fins (12) so that a fin (12) of said first plurality of fins (12) is interposed between two fins (22) of said second plurality of fins (22), and vice versa.

8. Device according to claims 2 and 7, wherein said second plurality of fins (22) is angularly staggered with said first plurality of fins (12) by said angular lead (α).

9. Device according to any one of claims 6 to 8, as claim 8 is appended to claim 6, wherein said actuator means (2) comprises a first actuator (16) arranged for interacting with said first plurality of fins (12).

10. Device according to any one of claims 6 to 9, as claim 8 is appended to claim 6, wherein said actuator means (2) comprises a second actuator (17) arranged for interacting with said second plurality of fins (22).

11. Device according to any one of claims 6 to 10, as claim 8 is appended to claim 6, wherein said further actuator means (10) comprises a further first actuator (46) arranged for interacting with said first plurality of fins (12).

12. Device according to any one of claims 6 to 11, as claim 8 is appended to claim 6, wherein said further actuator means (10) comprises a further second actuator (47) arranged for interacting with said second plurality of fins (22).

13. Device according to any preceding claim, comprising means (4) for preventing said movement element (28) from rotating around said longitudinal axis (B).

14. Air-conveying apparatus for conveying containers (100) comprising guide means (30) arranged for abutting on said containers (100) along a direction (A2) that is transverse to a movement path of said containers along said apparatus (43), **characterised in that** said guide means (30) is moved by at least a device for linearly moving an object (1; 101; 201) according to any one of claims 1 to 13.

## Patentansprüche

1. Vorrichtung zum linearen Bewegen eines Objekts (31, 32), insbesondere einer Anlageführung für Behälter (100) in einer Luftfördervorrichtung (43), mit einem Bewegungselement (28; 128), das an einem Ende (29; 129) davon mit dem Objekt (31, 32) verbindbar ist und mit einem Gewindeabschnitt (14; 114) versehen ist, der zum Eingriff mit einer Mutterschraubeinrichtung (8; 108) geeignet ist, und einer linearen Aktuatoreinrichtung (2, 10; 102), die zum Drehen der Mutterschraubeinrichtung (8; 108) durch aufeinander folgende Winkelsteigungen angeordnet ist, um das Bewegungselement (28; 128) entlang einer jeweiligen Längsachse (B) zu bewegen, **dadurch gekennzeichnet, dass** die lineare Aktuatoreinrichtung (2, 10) eine Aktuatoreinrichtung (2) zum Drehen der Mutterschraubeinrichtung (8) gemäß einer Drehrichtung (R1) und eine weitere Aktuatoreinrichtung (10) zum Drehen der Mutterschraubeinrichtung (8) gemäß einer weiteren Drehrichtung entgegengesetzt zur Drehrichtung (R1) umfasst.

2. Vorrichtung nach Anspruch 1, wobei die Winkelsteigungen eine definierte Größe (α, β) aufweisen.

3. Vorrichtung nach Anspruch 1 oder 2, wobei die lineare Aktuatoreinrichtung (2, 10; 102) entlang einer Richtung (A1) wirkt, die zur Längsachse (B) quer liegt.

4. Vorrichtung nach einem vorangehenden Anspruch, wobei von einer Außenwand der Mutterschraubeinrichtung (8) eine Rippeneinrichtung (12, 22) vorsteht, die so geformt ist, dass sie durch die lineare Aktuatoreinrichtung (2, 10) geschoben wird.

5. Vorrichtung nach Anspruch 4, wobei die Rippeneinrichtung (12, 22) radial in Bezug auf die Längsachse (B) vorsteht.

6. Vorrichtung nach Anspruch 4 oder 5, wobei die Rippeneinrichtung (12, 22) eine erste Vielzahl von Rippen (12) und eine zweite Vielzahl von Rippen (22) umfasst, wobei die zweite Vielzahl von Rippen (22) neben der ersten Vielzahl von Rippen (12) entlang der Längsachse (B) angeordnet ist.

7. Vorrichtung nach Anspruch 6, wobei die zweite Vielzahl von Rippen (22) mit der ersten Vielzahl von Rippen (12) winkelversetzt ist, so dass eine Rippe (12) der ersten Vielzahl von Rippen (12) zwischen zwei Rippen (22) der zweiten Vielzahl von Rippen (22) eingefügt ist und umgekehrt.

8. Vorrichtung nach den Ansprüchen 2 und 7, wobei die zweite Vielzahl von Rippen (22) mit der ersten Vielzahl von Rippen (12) um die Winkelsteigung (α) winkelversetzt ist.

9. Vorrichtung nach einem der Ansprüche 6 bis 8, wenn Anspruch 8 an Anspruch 6 angehängt ist, wobei die Aktuatoreinrichtung (2) einen ersten Aktuator (16) umfasst, der zum Zusammenwirken mit der ersten Vielzahl von Rippen (12) angeordnet ist.

10. Vorrichtung nach einem der Ansprüche 6 bis 9, wenn Anspruch 8 an 6 angehängt ist, wobei die Aktuatoreinrichtung (2) einen zweiten Aktuator (17) umfasst, der zum Zusammenwirken mit der zweiten Vielzahl von Rippen (22) angeordnet ist.

11. Vorrichtung nach einem der Ansprüche 6 bis 10, wenn Anspruch 8 an Anspruch 6 angehängt ist, wobei die weitere Aktuatoreinrichtung (10) einen weiteren ersten Aktuator (46) umfasst, der zum Zusammenwirken mit der ersten Vielzahl von Rippen (12) angeordnet ist.

12. Vorrichtung nach einem der Ansprüche 6 bis 11, wenn Anspruch 8 an Anspruch 6 angehängt ist, wobei die weitere Aktuatoreinrichtung (10) einen weiteren zweiten Aktuator (47) umfasst, der zum Zusammenwirken mit der zweiten Vielzahl von Rippen (22) angeordnet ist.

13. Vorrichtung nach einem der vorangehenden Ansprüche mit einer Einrichtung (4) zum Verhindern, dass sich das Bewegungselement (28) um die Längsachse (B) dreht.

14. Luftfördervorrichtung zum Befördern von Behältern (100) mit einer Führungseinrichtung (30), die zur Anlage an den Behältern (100) entlang einer Richtung (A2) angeordnet ist, die zu einem Bewegungsweg der Behälter entlang der Vorrichtung (43) quer liegt, **dadurch gekennzeichnet, dass** die Führungseinrichtung (30) durch mindestens eine Vorrichtung zum linearen Bewegen eines Objekts (1; 101; 201) nach einem der Ansprüche 1 bis 13 bewegt wird.

## Revendications

1. Dispositif pour déplacer linéairement un objet (31, 32), en particulier un guide de butée pour des conteneurs (100) dans un appareil de transport pneumatique (43), comprenant un élément de mouvement (28; 128), associable à une extrémité (29; 129) de celui-ci audit objet (31, 32) et muni d'une partie filetée (14; 114) adaptée pour venir en prise avec des moyens à vis et écrou (8; 108), et des moyens d'actionneur linéaire (2, 10; 102) agencés pour faire tourner lesdits moyens à vis et écrou (8; 108) par des pas angulaires consécutifs de manière à déplacer ledit élément de mouvement (28; 128) le long d'un axe longitudinal (B) respectif, **caractérisé en ce que** lesdits moyens d'actionneur linéaire (2, 10) comprennent des moyens d'actionneur (2) pour faire tourner lesdits moyens à vis et écrou (8) suivant une direction de rotation (R1) et des moyens d'actionneur supplémentaire (10) pour faire tourner lesdits moyens à vis et écrou (8) suivant une direction de rotation supplémentaire opposée à ladite direction de rotation (R1).

2. Dispositif selon la revendication 1, dans lequel lesdits pas angulaires ont une taille définie (α, β).

3. Dispositif selon la revendication 1 ou 2, dans lequel lesdits moyens d'actionneur linéaire (2, 10; 102) agissent le long d'une direction (A1) qui est transversale audit axe longitudinal (B).

4. Dispositif selon l'une quelconque des revendications précédentes, dans lequel à partir d'une paroi extérieure desdits moyens à vis et écrou (8) font saillie des moyens à ailettes (12, 22) formés de manière à être poussés par lesdits moyens d'actionneur linéaire (2, 10).

5. Dispositif selon la revendication 4, dans lequel lesdits moyens à ailettes (12, 22) font radialement saillie par rapport audit axe longitudinal (B).

6. Dispositif selon la revendication 4 ou 5, dans lequel lesdits moyens à ailettes (12, 22) comprennent une première pluralité d'ailettes (12) et une seconde pluralité d'ailettes (22), ladite seconde pluralité d'ailettes (22) étant agencée à côté de ladite première pluralité d'ailettes (12) le long dudit axe longitudinal (B).

7. Dispositif selon la revendication 6, dans lequel ladite seconde pluralité d'ailettes (22) est angulairement décalée de ladite première pluralité d'ailettes (12) de sorte qu'une ailette (12) de ladite première pluralité d'ailettes (12) soit interposée entre deux ailettes (22) de ladite seconde pluralité d'ailettes (22), et vice versa.

8. Dispositif selon les revendications 2 et 7, dans lequel ladite seconde pluralité d'ailettes (22) est angulairement décalée de ladite première pluralité d'ailettes (12) dudit pas angulaire (α).

9. Dispositif selon l'une quelconque des revendications 6 à 8, lorsque la revendication 8 est rattachée à la revendication 6, dans lequel lesdits moyens d'actionneur (2) comprennent un premier actionneur (16) agencé pour interagir avec ladite première pluralité d'ailettes (12).

10. Dispositif selon l'une quelconque des revendications 6 à 9, lorsque la revendication 8 est rattachée à la revendication 6, dans lequel lesdits moyens d'actionneur (2) comprennent un second actionneur (17) agencé pour interagir avec ladite seconde pluralité d'ailettes (22).

11. Dispositif selon l'une quelconque des revendications 6 à 10, lorsque la revendication 8 est rattachée à la revendication 6, dans lequel lesdits moyens d'actionneur supplémentaire (10) comprennent un premier actionneur supplémentaire (46) agencé pour interagir avec ladite première pluralité d'ailettes (12).

12. Dispositif selon l'une quelconque des revendications 6 à 11, lorsque la revendication 8 est rattachée à la revendication 6, dans lequel lesdits moyens d'actionneur supplémentaire (10) comprennent un second actionneur supplémentaire (47) agencé pour interagir avec ladite seconde pluralité d'ailettes (22).

13. Dispositif selon l'une quelconque des revendications précédentes, comprenant des moyens (4) pour empêcher ledit élément de mouvement (28) de tourner autour dudit axe longitudinal (B).

14. Appareil de transport pneumatique pour transporter des conteneurs (100) comprenant des moyens de guidage (30) agencés pour venir en butée contre lesdits conteneurs (100) le long d'une direction (A2) qui est transversale à un chemin de mouvement desdits conteneurs le long dudit appareil (43), **caractérisé en ce que** lesdits moyens de guidage (30) sont déplacés par au moins un dispositif pour déplacer linéairement un objet (1; 101; 201) selon l'une quelconque des revendications 1 à 13.
